# DEMANDE DE BREVET EUROPEEN

(11) **EP 0 926 104 A1**
(43) Date de publication de la demande: **30.06.1999**
(21) Numéro de dépôt: 98440296.6
(22) Date de dépôt: 18.12.1998
(51) Int. Cl.: C04B 18/28

(54) **Béton de bois renfermant un granulat de bois enrobé de ciment**

(30) Priorité: 31.03.1998 FR 9804139; 18.12.1997 FR 9716284
(71) Demandeur: Lafarge Cements S.A., 92214 Saint Cloud Cedex (FR)
(72) Inventeur: La désignation de l'inventeur n'a pas encore été déposée
(74) Mandataire: Arbousse-Bastide, Jean-Claude Philippe

(57) **Abrégé**

Béton de bois renfermant des plaquettes de bois provenant des déchets de l'industrie.

Il renferme un granulat de bois enrobé de ciment obtenu par la succession d'opérations ci-après, effectuées dans un malaxeur :
a) brassage de plaquettes de bois avec de l'eau additionnée d'un produit plastifiant ;
b) addition de ciment et brassage ;
c) addition d'eau jusqu'à obtention d'un mélange non pâteux ;
d) séchage.

## Description

La présente invention a pour objet un béton de bois renfermant un granulat de bois enrobé de ciment.

Les bétons de bois sont des matériaux composites à matrice cimentaire dans lesquels les granulats minéraux classiquement utilisés, tels que le gravier ou le sable, sont au moins partiellement remplacés par des granulats de bois.

Les granulats de bois utilisés sont couramment des broyats de bois dénommés plaquettes, dont la longueur peut varier de 2 à 20 mm, et ils constituent le plus souvent les déchets des industries du bois, et notamment ceux provenant de la destruction des palettes de manutention usagées.

Le béton de bois présente par rapport aux bétons classiques des qualités de légèreté, d'isolation thermique et d'isolation acoustique qui, jointes à l'avantage de permettre la valorisation des déchets de bois, expliquent le développement de sa fabrication et son utilisation de plus en plus répandue comme élément de maçonnerie, notamment dans la construction de murs anti-bruit.

Toutefois cette utilisation est largement subordonnée à la réalisation de bétons de bois dits stabilisés, c'est à dire présentant, outre une faible réactivité chimique vis à vis de l'environnement, de faibles variations dimensionnelles en fonction des variations hygrothermiques auxquelles ils sont soumis.

La stabilité des bétons de bois peut être obtenue par des traitements physiques ou chimiques appliqués aux granulats de bois.

Parmi les traitements connus à ce jour on peut citer l'enrobage superficiel des granulats de bois à l'aide de résines ou de paraffine, qui permet d'isoler le bois et de le rendre inerte vis-à-vis des agents extérieurs.

On peut également citer la minéralisation, c'est-à-dire l'imprégnation minérale à l'aide d'une solution de chlorure de calcium ou de pâte à chaux associée à une solution de silicate de soude. Cette minéralisation diminue l'hygroscopie du bois et sa capacité d'absorption d'eau.

La présente invention a pour but de proposer un traitement nouveau des plaquettes de bois, qui permet d'obtenir un béton de bois présentant des propriétés particulièrement avantageuses, tant au plan de ses capacités d'isolation thermique et acoustique qu'à celui de sa stabilité dimensionnelle vis à vis des variations hygrothermiques de son environnement.

La présente invention a ainsi pour objet un béton de bois qui se caractérise essentiellement en ce qu'il renferme un granulat de bois enrobé de ciment.

Le granulat de bois enrobé mis en oeuvre dans la fabrication du béton de bois selon l'invention est obtenu par la succession d'opérations ci-après, effectuées dans un malaxeur :
a) brassage de plaquettes de bois avec de l'eau additionnée d'un produit plastifiant ;
b) addition de ciment et brassage ;
c) addition d'eau jusqu'à obtention d'un mélange non pâteux ;
d) séchage.

L'étape a) de fabrication du granulat de bois enrobé est conduite très rapidement, durant 20 à 30 secondes, et elle est de préférence réalisée en mettant en oeuvre entre 1/3 et 1/4 de l'eau nécessaire à la fabrication de l'enrobage de ciment, selon l'humidité des plaquettes utilisées.

L'étape b) est également conduite très rapidement, durant 20 à 30 secondes, le ciment étant versé dans le malaxeur sous brassage énergique.

L'étape c) met en oeuvre l'eau restante et elle dure environ 1 minute, toujours sous brassage.

L'imprégnation du granulat de bois par le mélange de produit plastifiant et de ciment conduit à l'obturation des pores du bois, la pâte pénétrant dans les pores et les canaux du bois avant de se solidifier, comme cela a pu être mis en évidence par des observations microscopiques.

L'obturation des pores et des canaux du bois ainsi réalisée permet d'éviter la reprise ultérieure d'humidité. Il en résulte que le béton fabriqué à partir du granulat de bois enrobé ainsi obtenu présente d'excellentes qualités de stabilité dimensionnelle vis-à-vis des variations hygrothermiques.

Le plastifiant mis en oeuvre pour obtenir le granulat de bois enrobé peut être n'importe quel plastifiant connu dans l'industrie de la cimenterie pour conserver au ciment une certaine plasticité et retarder sa prise : on peut ainsi utiliser, entre autres, les plastifiants à base de polynaphtalènes ou de polymélaminés commercialisés sous la marque de fabrique "CHRYSOFLUID".

Conformément à l'invention, le plastifiant est mis en oeuvre en solution aqueuse diluée, à raison de 1 à 5% en poids de plastifiant par rapport au poids de ciment utilisé, et à raison d'environ 30 à 40 litres d'eau pour 1m³ de plaquettes de bois, selon le degré d'humidité de ces dernières.

La granulométrie des plaquettes de bois mises en oeuvre est fonction de la destination du béton de bois que l'on veut obtenir : ainsi, pour une bonne clouabilité, souhaitable dans le cas de la fabrication de plots pour palettes de manutention, on choisira un mélange de plaquettes de bois de longueur comprise entre 3 et 8 mm, tandis que pour une plus grande légèreté, par exemple pour la fabrication de murs anti-bruit, on choisira un mélange de plaquettes de longueur comprise entre 4 et 16 mm.

Les plaquettes de bois mises en oeuvre sont avantageusement des plaquettes de bois résineux, et de préférence des plaquettes de pin maritime, essence très répandue, donc bon marché et moins résineuse que le sapin.

Le ciment utilisé pour enrober les plaquettes de bois peut être n'importe quel ciment de type connu, formant après séchage une coquille dure autour desdites plaquettes. Le ciment est mis en oeuvre à raison d'environ 150 à 200kg pour 1m³ de plaquettes de bois.

Les granulats enrobés ainsi obtenus peuvent être stockés après séchage en vue d'une utilisation ultérieure, mais ils peuvent aussi être utilisés immédiatement pour la fabrication du béton de bois.

Le béton de bois selon l'invention est obtenu par mélange du granulat enrobé avec du sable ou de la pouzzolane et un ciment éventuellement additionné de charges, puis gâchage avec de l'eau, moulage et séchage.

Dans un mode de réalisation préférentiel de l'invention, le béton de bois est obtenu en ajoutant du sable ou de la pouzzolane à 1 m³ de granulat de bois enrobé jusqu'à obtenir un poids total situé entre 300 et 450 kg, puis en ajoutant 300 à 350 kg de ciment. Le mélange est ensuite gâché avec de l'eau puis moulé et séché.

Le béton de bois ainsi obtenu présente une densité comprise entre 600 et 900 kg/m³ et de bonnes qualités d'isolation thermique. Il présente également de bonnes qualités d'isolation acoustique qui se manifestent, pour les fréquences supérieures à 400 Hz, par un coefficient d'absorption acoustique compris entre 0,85 et 1.

La technique d'enrobage des granulats de bois selon l'invention permet en outre une baisse des variations dimensionnelles du béton de bois ainsi obtenu, qui sont de l'ordre de 1,5 à 2,5 mm/m, au lieu de 3 à 5 mm/m pour les bétons de bois actuellement commercialisés.

Selon un mode de réalisation particulier de l'invention, le ciment mis en oeuvre dans la fabrication du granulat de bois enrobé est partiellement remplacé par de la fumée de silice.

Dans ce mode de réalisation, la proportion de fumée de silice mise en oeuvre se situe entre 5 et 15 % en poids du poids de ciment initialement prévu et la fumée de silice utilisée est de préférence de la fumée de silice non densifiée, de densité comprise entre 0,1 et 0,25 g/cm³.

Dans ce mode de réalisation, la silice est avantageusement introduite dans le malaxeur avant le ciment, en sorte que les étapes de fabrication du granulat enrobé sont les suivantes :
a) brassage des plaquettes de bois avec de l'eau additionnée d'un produit plastifiant ;
b) introduction de la fumée de silice et brassage ;
c) addition de ciment et brassage ;
d) addition d'eau jusqu'à obtention d'un mélange non pâteux ;
e) séchage.

La fumée de silice peut également remplacer partiellement le ciment dans la fabrication du béton de bois à partir du granulat de bois enrobé : on a alors de préférence recours à de la fumée de silice densifiée, de densité comprise entre 0,4 et 0,55 g/cm³, et on l'utilise à raison de 10 à 20 % en poids du poids de ciment initialement prévu, en la mélangeant au ciment avant de l'introduire dans le malaxeur.

Le béton de bois ainsi obtenu présente des qualités encore améliorées de stabilité dimensionnelle, particulièrement avantageuses dans certaines applications, comme la réalisation de panneaux de façades isolants.

Les exemples qui suivent sont fournis à titre de simple illustration de l'invention, vis-à-vis de laquelle ils ne présentent aucun caractère limitatif.

### EXEMPLE 1

**Fabrication de béton renfermant un granulat de bois enrobé de ciment.**

### A) Fabrication du granulat enrobé

Dans un malaxeur de type connu on introduit 1 m³ de plaquettes de bois, sur lesquelles on verse 30 litres d'eau additionnée de 6 litres de plastifiant. On brasse pendant 30 secondes puis on ajoute 180 kg de ciment. On brasse pendant encore 30 secondes puis on ajoute de l'eau en fonction de l'humidité des plaquettes de bois, jusqu'à obtenir un mélange non pâteux. On laisse sécher et on stocke pour un emploi ultérieur le granulat enrobé obtenu.

### B) Fabrication du béton

On introduit dans un malaxeur ou une bétonnière 1 m³ de granulat enrobé obtenu dans l'étape précédente, auquel on ajoute du sable de granulométrie 0-3, ou de la pouzzolane, jusqu'à obtenir un poids total de 400 à 450 kg.

On ajoute 300 kg de ciment, puis on gâche le mélange avec de l'eau selon la technique habituelle de fabrication du béton, on le met en forme et on le sèche selon des techniques connues, par exemple par étuvage.

On obtient un béton de bois dont la densité est d'environ 760 à 780 kg/m³.

### EXEMPLE 2

### Fabrication de béton renfermant un granulat de bois enrobé de ciment et de fumée de silice

### A) Fabrication du granulat enrobé

Dans un malaxeur de type connu on introduit 1 m³ de plaquettes de bois sur lesquelles on verse 30 litres d'eau additionnée de 6 litres de plastifiant. On brasse pendant 20 secondes puis on ajoute 54 kg de fumée de silice non densifiée, de densité comprise entre 0,1 et 0,25 g/cm³. On brasse pendant encore 20 secondes puis on verse 126 kg de ciment. On poursuit le brassage pendant 1 minute en ajoutant de l'eau en fonction de l'humidité des plaquettes de bois, jusqu'à obtenir un mélange non pâteux. On laisse sécher et on stocke pour un emploi ultérieur le granulat enrobé obtenu.

### B) Fabrication du béton

On introduit dans un malaxeur ou une bétonnière 1 m³ de granulat enrobé auquel on ajoute du sable de granulométrie 0-3, ou de la pouzzolane, jusqu'à obtenir un poids total de 400 à 450 kg.

On ajoute 270 kg de ciment additionnés de 30 kg de fumée silice densifiée, de densité comprise entre 0,4 et 0,55 g/cm³, puis on gâche le mélange avec de l'eau selon la technique habituelle de fabrication du béton, on le met en forme et on le sèche selon des techniques connues, par exemple par étuvage.

On obtient un béton de bois dont la densité est d'environ 760 à 780 kg/m³.

Le béton de bois selon l'invention, outre sa stabilité dimensionnelle, présente d'excellentes qualités d'isolation acoustique, d'isolation thermique, de légèreté, ainsi qu'une bonne aptitude à l'usinage industriel, notamment au sciage et au découpage.

## Revendications

1. Béton de bois renfermant des plaquettes de bois provenant des déchets de l'industrie, caractérisé en ce qu'il renferme un granulat de bois enrobé de ciment obtenu par la succession d'opérations ci-après, effectuées dans un malaxeur :
a) brassage de plaquettes de bois avec de l'eau additionnée d'un produit plastifiant ;
b) addition de ciment et brassage ;
c) addition d'eau jusqu'à obtention d'un mélange non pâteux ;
d) séchage.

2. Béton de bois selon la revendication 1 caractérisé en ce que le ciment mis en oeuvre dans la fabrication du granulat de bois enrobé l'est à raison d'environ 150 à 200 kg pour 1m³ de granulat de bois.

3. Béton de bois selon la revendication 1 ou la revendication 2, caractérisé en ce que le produit plastifiant est mis en oeuvre à raison de 1 à 5 % en poids par rapport au poids de ciment.

4. Béton de bois selon l'une des revendications précédentes, caractérisé en ce que l'eau est mise en oeuvre à raison d'environ 30 à 40 litres pour 1m³ de plaquettes de bois.

5. Béton de bois selon l'une des revendications précédentes, caractérisé en ce que le ciment est partiellement remplacé par de la fumée de silice, à raison de 5 à 15 % en poids de fumée de silice par rapport au poids de ciment prévu.

6. Béton de bois selon la revendication 5, caractérisé en ce que la fumée de silice mise en oeuvre est une fumée de silice non densifiée, de densité comprise entre 0,1 et 0,25 g/cm³.

7. Béton de bois selon la revendication 5, caractérisé en ce que la fumée de silice est introduite dans le malaxeur avant le ciment.

8. Béton de bois selon l'une quelconque des revendications précédentes, caractérisé en ce qu'il est obtenu par addition de ciment et de sable ou de pouzzolane au granulat de bois enrobé, gâchage avec de l'eau, moulage puis séchage.

9. Béton de bois selon la revendication 8, caractérisé en ce qu'il est obtenu en ajoutant du sable ou de la pouzzolane à 1m³ de granulat de bois enrobé jusqu'à obtenir un poids total de 300 à 450 kg, puis en ajoutant 300 à 350 kg de ciment.

10. Béton de bois selon la revendication 9, caractérisé en ce que le ciment est partiellement remplacé par de la fumée de silice, à raison de 10 à 20 % en poids de silice par rapport au poids de ciment prévu.

11. Béton de bois selon la revendication 10, caractérisé en ce que la fumée de silice mise en oeuvre est une fumée de silice densifiée, de densité comprise entre 0,4 et 0,55g/cm³.
